Europäisches Patentamt

European Patent Office

Office européen des brevets

(11) Veröffentlichungsnummer: **0 423 500 A2**

## (12) EUROPÄISCHE PATENTANMELDUNG

(21) Anmeldenummer: 90118084.4

(51) Int. Cl.5: **B23K 1/00**, F25B 39/00

(22) Anmeldetag: 20.09.90

(30) Priorität: 16.10.89 DE 3934479

(43) Veröffentlichungstag der Anmeldung:
24.04.91 Patentblatt 91/17

(84) Benannte Vertragsstaaten:
AT BE CH DE DK ES FR GB GR IT LI LU NL SE

(71) Anmelder: Helmut Lingemann GmbH & Co.
Am Deckershäuschen 62
W-5600 Wuppertal 1(DE)

(72) Erfinder: Lingemann, Horst
Horather Strasse 247
W-5600 Wuppertal(DE)

(74) Vertreter: Patentanwälte Dr. Solf & Zapf
Schlossbleiche 20 Postfach 13 01 13
W-5600 Wuppertal 1(DE)

(54) Verfahren zum Herstellen eines Plattenverflüssigers für eine Kühlmaschine, inbesondere für einen Haushalts-Kühlschrank, sowie insbesondere nach dem Verfahren hergestellter Plattenverflüssiger.

(57) Verfahren zum Herstellen eines Plattenverflüssigers (1) für ein Kühlgerät, insbesondere einen Haushalts-Kühlschrank, bei dem an einer Blechplatte (2), insbesondere aus Aluminium, an einer Seite eine kühlschlangenförmig gebogene Rohrleitung (4) aus Aluminium angeordnet und befestigt und an der anderen Seite eine Schwarz-Beschichtung (5) gebildet wird, ist so weiterzubilden, daß bei Gewährleistung eines verbesserten Wärmetransfers zwischen der Rohrleitung (4) und der Platte (2) eine einfache und kostengünstige Herstellung möglich ist. Dies wird dadurch erreicht, daß eine Rohrleitung (4) und/oder eine Blechplatte (2) verwendet werden, die auf jeweils der dem anderen Teil (2, 4) zugewandten Fläche mit einer Lotschicht (6), z. B. auf der Material-Basis Aluminium/Silizium-Legierung, versehen sind, wobei zunächst die Schwarz-Beschichtung (5) vor der Anordnung der Rohrleitung (4) an der Blechplatte (2) gebildet wird und dann die Rohrleitung (4) in Kontakt mit der Blechplatte (2) gebracht und die Kontaktstellen im wesentlichen über die gesamte Länge der Rohrleitung (4) verlötet werden.
Die Erfindung bezieht sich auch auf einen Plattenverflüssiger.

Fig. 1

EP 0 423 500 A2

## VERFAHREN ZUM HERSTELLEN EINES PLATTENVERFLÜSSIGERS FÜR EINE KÜHLMASCHINE, INSBESON-DERE FÜR EINEN HAUSHALTS-KÜHLSCHRANK, SOWIE INSBESONDERE NACH DEM VERFAHREN HERGE-STELLTER PLATTENVERFLÜSSIGER.

Die Erfindung bezieht sich auf ein Verfahren bzw. einen Plattenverflüssiger nach dem Oberbegriff des Anspruchsw 1 bzw. 17.

Bei einem Kühlschrank handelt es sich um eine ortsfeste oder bewegliche Einrichtung zur Kühlung von geschlossenen Räumen und von darin aufgenommenen festen, flüssigen oder gasförmigen Körpern auf eine vorgegebene Temperatur, die geringer ist, als die Temperatur der Umgebung. Dazu muß den Körpern Wärme entzogen und diese an die Umgebung abgegeben werden. Letzterem dient ein Plattenverflüssiger, wobei der Wärmetransport von einem Kältemittel (Frigen) übernommen wird.

Die wesentlichen Bauteile eines Plattenverflüssigers sind ein tafelförmiges Blech bzw. eine Blechplatte, auf der eine Kühlschlangenförmig verlegte Rohrleitung angeordnet und befestigt ist. Die Rohrleitung wird vom Kältemittel durchströmt. Es ist der Zweck der Platte, den Wärmetransfer zwischen der Rohrleitung und der Umgebung zu verbessern. Es ist deshalb ein guter Wärmeübergang zwischen der Rohrleitung und der Platte sowie zwischen letzterer und der Umgebung erwünscht. Zwecks Verbesserung der Wärmeabgabe an die Umgebung ist es bekannt, die der Rohrleitung abgewandte Breitseite der Platte zu schwärzen.

Es ist bereits ein Verfahren zum Herstellen eines Plattenverflüssigers vorgeschlagen worden, bei dem die Rohrleitung auf die Platte aufgeklebt wird. Bei diesem Verfahren wird die Platte zugeschnitten, der Kleber auf die Oberseite der im wesentlichen horizontal angeordneten Platte aufgetragen, die Rohrleitung auf die Oberseite aufgelegt, der Kleber durch Temperatureinwirkung verfestigt, die Platte gewendet und dann geschwärzt, wobei eine schwarze Beschichtung auf die nunmehr nach oben weisende Oberseite der Platte aufgetragen wird. Dann wird die Schicht ebenfalls durch Zuführung von Wärme gehärtet.

Bei einem nach diesem Verfahren hergestellten Plattenverflüssiger ist die Festigkeit der Verbindung problematisch, weil angesichts der Temperaturschwankungen besondere Spannungsbelastungen der Verbindung bestehen, so daß besonders geeignete und teure Klebstoffe verwendet werden müssen, die die Herstellung verteuern. Außerdem sind die brauchbaren Klebstoffe keine guten Wärmeleiter. Ferner ist die Größe der sich ergebenden Verbindungsfläche verhältnismäßig klein. Hierdurch ist die Wärmeübertragung beeinträchtigt.

Der Erfindung liegt die Aufgabe zugrunde, ein Verfahren nach dem Oberbegriff des Anspruchs 1 bzw. einen Plattenverflüssiger nach dem Oberbegriff des Anspruchs 17 so weiterzubilden, daß bei Gewährleistung eines verbesserten Wärmetransfers zwischen der Rohrleitung und der Platte eine einfache und kostengünstige Herstellung möglich ist.

Diese Aufgabe wird durch die Merkmale der Ansprüche 1 und gelöst.

Beim erfindungsgemäßen Verfahren wird eine Rohrleitung aus Aluminium und/oder eine Platte insbesondere aus Aluminium verwendet, die auf der jeweils dem anderen Teil zugewandten Seite lotbeschichtet bzw. lotplattiert sind, und die Rohrleitung wird an der Platte verlötet. Es wird somit ein Zwischenprodukt in Form einer Rohrleitung und/oder einer Platte verwendet, bei der das Befestigungsmittel bei der Herstellung der Rohrleitung und/oder der Platte bzw. vor der Anordnung der Rohrleitung an der Platte kostengünstig aufgetragen werden kann, so daß es beim Verlöten des Plattenverflüssigers keines solchen Auftrags mehr bedarf. Eine Verlötung zwischen der Rohrleitung und der Platte stellt sich als eine Maßnahme dar, die nicht nur zu einer hohen Festigkeit der Verbindung führt, sondern bei der zum einen aufgrund einer guten Wärmeleitfähigkeit des Lotes und zum anderen wegen der sich beim Löten aufgrund von Adhäsion automatisch einstellenden Lotnaht mit konvexer Lotansammlung eine bessere Wärmeübertragung zwischen der Rohrleitung und der Platte ergibt. Außerdem wird bei dem erfindungsgemäßen Verfahren die Schwärzung bzw. schwarze Beschichtung der Platte ebenfalls vor dem Verlöten vorgenommen, wobei vorzugsweise ebenfalls eine geschwärzte bzw. mit der schwarzen Schicht versehene Platte als Zwischenprodukt verwendet werden kann, so daß eine Schwärzung bzw. Beschichtung nach dem Verlöten entfällt. Nach dem erfindungsgemäßen Verfahren kann somit der Plattenverflüssiger einfacher, schneller und kostengünstiger hergestellt werden. Dabei ist eine Schwärzung bzw. schwarze Beschichtung an der lotbeschichteten bzw. lotplattierten Platte (Zwischenprodukt) vorzusehen, die die für das Verlöten erforderliche Temperatur ohne Beeinträchtigung auszuhalten vermag.

Die vorbeschriebenen Vorteile gelten auch für den erfindungsgemäßen Plattenverflüssiger nach Anspruch 17.

Vorteilhafte Weiterbildungen der Erfindung, deren Merkmale zur Lösung der gestellten Aufgabe weiter beitragen und auch eine schwarze Beschichtung umfassen, die sich für das erfindungsgemäße Verfahren bzw. den erfindungsgemäßen Plattenverflüssiger besonders gut eignet, sind in den Unteransprüchen

2

beschrieben.

Nachfolgend wird die Erfindung anhand von in einer Zeichnung dargestellten bevorzugten Ausführungsbeispielen näher erläutert. Es zeigt

Fig. 1 einen erfindungsgemäß ausgestalteten Plattenverflüssiger mit Blick auf die Breitseite, auf der sich die Rohrleitung befindet;

Fig. 2 den Teilschnitt II - II in Fig. 1 in vergrößerter Darstellung;

Fig. 3-6 der Fig.2 entsprechende Teilschnitte durch abgewandelte Ausgestaltungen.

Der erfindungsgemäße Plattenverflüssiger besteht aus einem tafel- bzw. plattenförmigen Blech 2 in vorzugsweise rechteckiger oder quadratischer Form, auf dessen einer Breitseite eine Kühlschlange 3 in Mäanderform bildende Rohrleitung 4 von etwa 4 bis 6 mm Durchmesser verlötet ist. Auf der anderen, der Rohrleitung 4 abgewandten Breitseite der Blechplatte 2 befindet sich eine die Wärmeabgabe fördernde schwarze Beschichtung 5. Die Blechplatte 2 und die Rohrleitung 4 bestehen aus Aluminium bzw. -legierung.

Der Plattenverflüssiger 1 ist für einen Haushalts-Kühlschrank (Hausgerät) konzipiert und befindet sich in montierter Stellung an der Rückseite des Kühlschranks in senkrechter Position, wobei die die Rohrleitung 4 tragende Breitseite des Plattenverflüssigers 1 dem Kühlschrank zugewandt ist, während die die Beschichtung 5 tragende Breitseite dem Kühlschrank abgewandt ist. Im Betrieb des Kühlschranks wird die den zu kühlenden Gegenständen im Kühlschrank entzogene Wärme mittels des Plattenverflüssigers 1 an die Umgebung abgegeben, wobei der Wärmetransport durch ein im Kreislauf durch die Rohrleitung 4 strömendes Kühlmedium erfolgt. Die vom Plattenverflüssiger 1 abzugebende Wärme wird somit von der Rohrleitung 4 selbst und der Blechplatte 2 abgegeben, wobei ein großer Teil der in der Rohrleitung 4 enthaltenen Wärme über deren Verbindung mit der Blechplatte 2 dieser übertragen wird. Die Rohrleitung 4 ist über ihre gesamte, sich im Bereich der Blechplatte 2 erstreckende Länge mit dieser verlötet, so daß sich eine linienförmige Lötverbindung ergibt. Hierdurch wird ein großer Wärmeübertragungsquerschnitt zwischen der Rohrleitung 4 und der Blechplatte 2 geschaffen. Eine Verlötung eignet sich besonders gut für die Verbindung, weil sie zum einen von verhältnismäßig großer Festigkeit ist, und zum anderen eine Lötverbindung automatisch einen verhältnismäßig großen Verbindungsquerschnitt ergibt, da das Lot beim Verlöten aufgrund von der sich automatisch einstellenden Adhäsion zu einem verhältnismäßig großen Verbindungssteg zusammengezogen wird, wobei sich konkav gerundete Seitenflächen des Verbindungsstegs ergeben, die zu dem angestrebten großen Verbindungsquerschnitt beitragen. Als Lotmaterial dient ein für das Verlöten von Aluminium geeignetes Lot.

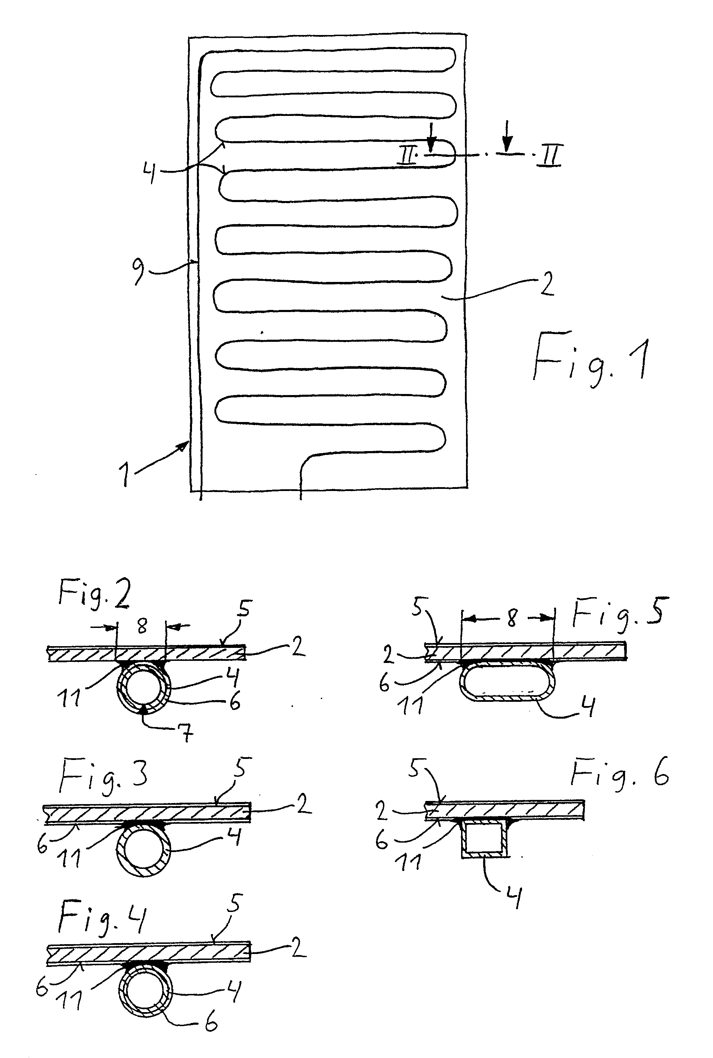

Gemäß der Erfindung ist wenigstens eine der miteinander zu verlötenden Oberflächen der Blechplatte 2 und der Rohrleitung 4 mit dem Lotmaterial beschichtet, so daß die Blechplatte 2 und/oder die Rohrleitung 4 mit der Lotschicht ein vorzugsweise aufgewalztes Laminat als vorfertigbares Zwischenprodukt bildet. Bei der Ausgestaltung gemäß Fig. 1 und 2 ist die Rohrleitung 4 außen mit der Lotschicht 6 versehen. Ein solches Rohr wird vorzugsweise aus einem einseitig lotplattierten Aluminiumstreifen gebildet, wobei der Streifen so durch eine dem Querschnitt der Rohrleitung entsprechende Formmatrize (Formöse) gezogen wird, das sich die Lotschicht 6 außen befindet und die gewünschte Rohrquerschnittsform mit einer Längsfuge ergibt. Die an dieser in Fig. 2 mit 7 bezeichneten Fuge vorhandenen Längsränder des zu einem Rohr geformten Streifens werden dicht miteinander verbunden, vorzugsweise durch Schweißen, wozu sich Hochfrequenzschweißen sehr gut eignet. Das so gebildete Rohr wird vor seinem Aufbringen auf die Blechplatte 2 kühlschlangen- bzw. mäanderförmig gebogen, wobei darauf zu achten ist, daß die Fuge 7 einen Abstand vom linien-bzw. streifenförmigen Anlagebereich 8 der Rohrleitung 4 aufweist. Vorzugsweise ist die Fuge 7 auf der Blechplatte 2 abgewandten Seite der Rohrleitung 4 angeordnet. Die Lotschicht 6 auf dem Rohr 4 (Streifen) und/oder der Blechplatte 2 kann sehr dünn sein.

Zum Verlöten wird die vorher gebogene Rohrleitung 4 auf die im wesentlichen horizontal angeordnete Blechplatte 2 aufgelegt und vorzugsweise vorfixiert bzw. gegen die Blechplatte 2 gedrückt, was z. B. durch Beschwerung bzw. Punktfixierung oder dergleichen der Kühlschlangen 3 erfolgen kann.

Die Anordnung der Kühlschlangen 3 ist vorzugsweise dergestalt, daß die Rohrleitung 4 unten beginnt, sich unter Bildung von horizontalen, mäanderförmigen Kühlschlangen 3 nach oben erstreckt und dann auf einer Seite sich mit dem Rohrleitungsabschnitt 9 wieder im wesentlichen vertikal nach unten erstreckt. Der über die gesamte Länge der Rohrleitung 4 zwischen letzterer und der Blechplatte 2 vorhandene, sich beim Verlöten automatisch formierende Lotsteg ist mit 11 bezeichnet.

Die Beschichtung 5 ist von einer solchen Temperaturbeständigkeit, daß sie bei der entstehenden Löttemperatur nicht beeinträchtigt wird, die beim vorliegenden Ausführungsbeispiel etwa 590°C beträgt. Bei der Beschichtung 5 handelt es sich vorzugsweise um eine Lackierung bzw. einen Lack, der insbesondere in einer Schicht (Einschichtlackierung) aufgetragen wird. Hierzu eignet sich ein Walzenauftrag sehr gut, der vorzugsweise mit einer Coilcoating-Anlage aufgetragen wird. Die Beschichtung 5 kann sehr dünn in Form eines Films aufgetragen werden. Bei Versuchen hat es sich gezeigt, daß Trockenfilm-Schichtdicken

3

zwischen etwa 10 und 20 µm sich besonders gut eignen und auch kostengünstig herzustellen sind. Die Erhärtung der flüssig aufgetragenen Beschichtung 5 bzw. Lacks erfolgt vorzugsweise durch Erwärmen bzw. Einbrennen. Dabei haben sich vorteilhafte Ergebnisse bei einer Einbrennzeit und -temperatur von bei mindestens etwa 120 sec. und etwa 350° C erzielen lassen. Es sollte eine Mindestobjekttemperatur von 260° C erreicht werden.

Bei Versuchen ist auch ermittelt worden, daß sich eine Beschichtung auf der Basis Venylmethylpolysiloxanharz gut eignet. Ein solcher Lack besteht vorzugsweise aus

| | | |
|---|---|---|
| Phenylmethylpolysiloxanharz z. B. Silikophen P 50/300 | | |
| 50%-ig in Xylol/Isobutanol etwa 50 bis 80, insbes. | 65 Tle. | |
| Spinellschwarz Cu (Cr, Fe)$_2$ 04 z. B. Echtschwarz 100 etwa 5 bis 11, insbesondere | 8 Tle. | |
| Ruß z. B. Corax L etwa 0,5 bis 3, insbesondere | 2 Tle. | |
| Calzium-Magnesiumsilikat z. B. Plastorit 0000 etwa 4 bis 8, insbesondere | 6 Tle. | |
| Zinkphosphat Zn$_3$ (PO$_4$)$_2$ z. B. Heucophos ZPO etwa 4 bis 8, insbesondere | 6 Tle. | |
| Montmorillonit-Schichtsilikat z. B. Betone 38 15%-ig etwa 0,5 bis 3,5 insbesondere | 2 Tle. | |
| Cyclohexanon etwa 9 bis 13, insbesondere | 11 Tle. | |
| | 100 Tle. | |

Fig. 3 zeigt einen der Fig. 2 entsprechenden Schnitt durch einen Plattenverflüssiger 1, bei dem nicht die Rohrleitung 4, sondern die Blechplatte 2 lotplattiert, d. h. mit einer Lotschicht 6 versehen ist.

Die Fig. 4 zeigt einen entsprechenden Teilschnitt durch einen Plattenverflüssiger 1, bei dem die Blechplatte 2 und die Rohrleitung 4 lotplattiert bzw. mit der Lotschicht 6 beschichtet sind.

Für einen Lotsteg 11 möglichst großen Querschnitts bzw. möglichst großer Breite eignen sich insbesondere ein solches Rohr, daß flächig an der Blechplatte 2 anliegt. Ein plattgedrücktes Rohr gemäß Fig. 5 oder ein Vierkantrohr gemäß Fig. 6 eignen sich deshalb sehr gut. Es sind jedoch auch schon mit einem kreisrunden Rohr gemäß Fig. 2 gute Ergebnisse erzielt worden.

Das Aufbringen der Lotschicht 6 auf die Blechplatte 2 oder die Rohrleitung 4 bzw. den sie durch Verformung bildenden zunächst flachen Streifen kann nach an sich bekannten Verfahren wie dem Vakuum-Lötverfahren (ohne Flußmittel), Flux-Lötverfahren (mit Flußmittel) oder Nocolok-Lötverfahren (mit Flußmittel) erfolgen.

In dem Fall, in dem die Blechplatte 2 mit der Lotschicht 6 auf ihrer der Schwarz-Beschichtung 5 abgewandten Seite beschichtet ist, läßt sich somit eine Blechplatte in Form eines Zwischenproduktes mit beiderseitiger, vorgenannter Beschichtung verwenden, was die Herstellung vereinfacht und die Herstellungskosten senkt.

Als Material für das Lot bzw. die Lotschicht 6 kann ein solches auf der Basis Aluminium/Silizium-Legierung verwendet werden.

Bei der Produktion von Blechplatten in Serie werden die Blechplatten 2 vorzugsweise von einem

4

Blechband geschnitten, das als Zwischenprodukt auf seiner einen Seite die Schwarz-Beschichtung 5 und ggf. auf seiner anderen Seite auch die Lotschicht 6 trägt, also einseitig oder beidseitig beschichtet ist. Hierdurch wird die Herstellung noch weiter vereinfacht und begünstigt.

Im folgenden werden die Verfahrensschritte zur Herstellung des Plattenverflüssigers 1 beschrieben.

Zuführen eines Bleches, insbesondere Blechbandes, mit ggf. einer Lotschicht auf einer Breitseite und einer Schwarz-Beschichtung 5 auf der anderen Breitseite, insbesondere in einer Position, in der die Schwarz-Beschichtung 5 nach unten gerichtet ist.

Auftragen der Schwarz-Beschichtung 5.

Abschneiden der Blechplatte 2 vor oder nach der Schwarz-Beschichtung 5 oder auch nach dem Löten.

Auflegen einer vorgefertigten mäanderförmig gebogenen Rohrleitung 4 auf die Blechplatte 2, wobei die betreffende Breitseite der Blechplatte 2 und/oder die Oberfläche der Rohrleitung 4 lotbeplattet sein kann.

Ggf. Vorfixieren der Rohrleitung 4 an der Blechplatte 2 und Erwärmen auf Löttemperatur und vorzugsweise gleichzeitiges Verlöten dieser Einheit.

Im Rahmen der Erfindung ist es auch möglich Blechplatten 2 oder Blechbänder zu verwenden, die bei einer Vorfertigung (Zwischenprodukt) mit einer Schwarz-Beschichtung 5 versehen worden sind. Bei Verwendung eines bzw. einer von einer Rolle abziehbaren Blechbandes bzw. Rohrleitung ist nach dem Abziehen ggf. ein Richten des Flachbandes bzw. der Rohrleitung erforderlich.

## Ansprüche

1. Verfahren zum Herstellen eines Plattenverflüssigers für ein Kühlgerät, insbesondere einen Haushalts-Kühlschrank, bei dem an einer Blechplatte, insbesondere aus Aluminium, an einer Seite eine kühlschlangenförmig gebogene Rohrleitung aus Aluminium angeordnet und befestigt und an der anderen Seite eine Schwarz-Beschichtung gebildet wird, **dadurch gekennzeichnet,** daß eine Rohrleitung (4) und/oder eine Blechplatte (2) verwendet werden, die auf jeweils der dem anderen Teil (2, 4) zugewandten Fläche mit einer Lotschicht (6), z. B. auf der Material-Basis Aluminium/Silizium-Legierung, versehen sind, wobei zunächst die Schwarz-Beschichtung (5) vor der Anordnung der Rohrleitung (4) an der Blechplatte (2) gebildet wird und dann die Rohrleitung (4) in Kontakt mit der Blechplatte (2) gebracht und die Kontaktstellen im wesentlichen über die gesamte Länge der Rohrleitung (4) verlötet werden.

2. Verfahren nach Anspruch1, **dadurch gekennzeichnet,** daß eine lotplattierte Rohrleitung (4) und/oder Blechplatte (2) verwendet werden.

3. Verfahren nach Anspruch 1 oder 2, **dadurch gekennzeichnet,** daß die Schwarz-Beschichtung (5) an einem Flachband in einer die Abmessungen der Blechplatte (2) enthaltenden Größe gebildet wird und die Blechplatte (2) vor oder vorzugsweise nach dem Löten abgeschnitten oder ausgetrennt wird.

4. Verfahren nach einem oder mehreren der Ansprüche 1 bis 3, **dadurch gekennzeichnet,** daß ein auf einer Rolle aufgewickeltes Flachband abgewickelt und die Schwarz-Beschichtung (5) vor oder nach dem Schneiden bzw. Trennen gebildet wird.

5. Verfahren nach einem oder mehreren der Ansprüche 1 bis 4, **dadurch gekennzeichnet,** daß vorzugsweise parallel zum Flachband ein auf eine Rolle aufgewickeltes Rohrleitungsband abgewickelt und zugeführt sowie vor oder nach dem Abschneiden gebogen wird.

6. Verfahren nach einem oder mehreren der Ansprüche 1 bis 5, **dadurch gekennzeichnet,** daß das Flachband zum Schneiden in horizontaler Lage mit unterseitig angeordneter Schwarz-Beschichtung (5) zugeführt wird.

7. Verfahren nach einem oder mehreren der Ansprüche 1 bis 6, **dadurch gekennzeichnet,** daß die Blechplatte (2) zum Auflegen der Rohrleitung (4) in horizontaler Lage mit unterseitig angeordneter Schwarz-Beschichtung (5) zugeführt wird.

8. Verfahren nach einem oder mehreren der Ansprüche 1 bis 7, **dadurch gekennzeichnet,** daß die Rohrleitung (4) beim Anordnen an bzw. beim oder nach dem Auflegen auf die Blechplatte (2) vorfixiert wird.

9. Verfahren nach einem oder mehreren der Ansprüche 1 bis 8, **dadurch gekennzeichnet,** daß die Schwarz-Beschichtung (5) durch Auftrag eines besonderen Werkstoffs gebildet wird.

10. Verfahren nach Anspruch 9, **dadurch gekennzeichnet,** daß die Schwarz-Beschichtung (5) flüssig oder teigig aufgetragen wird.

11. Verfahren nach Anspruch 10, **dadurch gekennzeichnet,** daß die

12. Verfahren nach einem oder mehreren der Ansprüche 9 bis 11, **dadurch gekennzeichnet,** daß für die Schwarz-Beschichtung (5) ein Lack verwendet wird.

13. Verfahren nach einem oder mehreren der Ansprüche 9 bis 12, **dadurch gekennzeichnet,** daß die Schwarz-Beschichtung (5) in einer Schicht aufgetragen wird.

14. Verfahren nach einem oder mehreren der Ansprüche 10 bis 13, **dadurch gekennzeichnet,** daß die Schwarz-Beschichtung (5) durch Wärmezufuhr getrocknet oder eingebrannt wird.

15. Verfahren nach Anspruch 14, **dadurch gekennzeichnet,** daß die Schwarz-Beschichtung (5) bei einer Mindestobjekttemperatur von etwa 200° bis 320°C, insbesondere 260°C eingebrannt bzw. getrocknet wird.

16. Verfahren nach Anspruch 14 oder 15, **dadurch gekennzeichnet,** daß die Schwarz-Beschichtung (5) über eine Wärmzeit von etwa 60 sec. bis etwa 180 sec., insbesondere etwa 120 sec. bei einer Temperatur von etwa 200°C bis etwa 300°C, insbesondere etwa 350°C getrocknet bzw. eingebrannt wird.

17. Plattenverflüssiger, der insbesondere nach einem oder mehreren der Ansprüche 1 bis 16 hergestellt ist, mit einer Blechplatte, insbesondere aus Aluminium, auf deren einer Seite eine Rohrleitung aus Aluminium kühlschlangenförmig angeordnet und befestigt ist, und auf deren anderer Seite eine Schwarz-Beschichtung gebildet ist, **dadurch gekennzeichnet,** daß bei Verwendung einer Rohrleitung (4) und/oder einer Blechplatte (2), die auf ihrer jeweils dem anderen Teil (2, 4) zugewandten Fläche mit einer Lotschicht (6), z. B. auf der Material-Basis Aluminium/Silizium-Legierung, beschichtet sind, die Rohrleitung (4) mit der Blechplatte (2) längs der Rohrleitung (4) im wesentlichen durchgehend verlötet ist.

18. Plattenverflüssiger nach Anspruch 17, **dadurch gekennzeichnet,** daß die Rohrleitung (4) und/oder die Blechplatte (2) lotplattiert sind.

19. Plattenverflüssiger nach Anspruch 17 oder 18, **dadurch gekennzeichnet,** daß die Schwarz-Beschichtung (5) bis etwa 590°C, vorzugsweise bis etwa 650°C temperaturbeständig ist.

20. Plattenverflüssiger nach einem oder mehreren der Ansprüche 17 bis 19, **dadurch gekennzeichnet,** daß die Schwarz-Beschichtung (5) eine durch den Auftrag eines separaten Werkstoffs gebildete Schicht ist.

21. Plattenverflüssiger nach einem oder mehreren der Ansprüche 17 bis 20, **dadurch gekennzeichnet,** daß die Schwarz-Beschichtung (5) eine flüssig oder teigig aufgetragene und dann erhärtete Schicht ist.

22. Plattenverflüssiger nach Anspruch 21, **dadurch gekennzeichnet,** daß die Schwarz-Beschichtung (5) durch Wärmezufuhr getrocknet oder eingebrannt ist.

23. Plattenverflüssiger nach einem oder mehreren der Ansprüche 17 bis 22, **dadurch gekennzeichnet,** daß die Schwarz-Beschichtung (5) in einer Schicht aufgetragen ist.

24. Plattenverflüssiger nach einem oder mehreren der Ansprüche 17 bis 23, **dadurch gekennzeichnet,** daß der Querschnitt der Rohrleitung (4) rund ist oder an der Anlageseite flach ist, vorzugsweise viereckig bzw. quadratisch oder oval bzw. plattgedrückt ist.

25. Verfahren oder Plattenverflüssiger nach einem oder mehreren der Ansprüche 1 bis 20, **gekennzeichnet durch** die Verwendung eines Lacks für die Schwarz-Beschichtung (5).

26. Verfahren oder Plattenverflüssiger nach Anspruch 25, **gekennzeichnet durch** die Verwendung eines Lacks auf der Basis Phenylmethylpolysiloxanharz mit vorzugsweise folgenden Anteilen

Phenylmethylpolysiloxanharz
z. B. Silikophen P 50/300
50%-ig in Xylol/Isobutanol etwa 50 bis 80, insbes.      65 Tle.

Spinellschwarz Cu (Cr, Fe)$_2$ O4
z. B. Echtschwarz 100 etwa 5 bis 11, insbesondere      8 Tle.

Ruß z. B. Corax L etwa 0,5 bis 3, insbesondere      2 Tle.

Calzium-Magnesiumsilikat
z. B. Plastorit 0000 etwa 4 bis 8, insbesondere      6 Tle.

Zinkphosphat Zn$_3$ (PO$_4$)$_2$
z. B. Heucophos ZPO etwa 4 bis 8, insbesondere      6 Tle.

Montmorillonit-Schichtsilikat
z. B. Betone 38 15%-ig etwa 0,5 bis 3,5 insbesondere      2 Tle.

Cyclohexanon etwa 9 bis 13, insbesondere      <u>11 Tle.</u>
                                                            <u>100 Tle.</u>

Fig. 1

Fig. 2

Fig. 3

Fig. 4

Fig. 5

Fig. 6